# EUROPEAN PATENT APPLICATION

(11) **EP 2 413 405 A1**
(43) Date of publication of application: **01.02.2012**
(21) Application number: 10755820.7
(22) Date of filing: 03.03.2010
(51) Int. Cl.: H01M 4/90, H01M 8/10, H01M 8/22

(54) **FUEL CELL**

(30) Priority: 24.03.2009 JP 2009072794
(71) Applicant: Daihatsu Motor Co., Ltd., Ikeda-shi, Osaka 563-8651 (JP)
(72) Inventor: SAKAMOTO, Tomokazu, Gamo-gun Shiga 520-2593 (JP); ASAZAWA, Koichiro, Gamo-gun Shiga 520-2593 (JP)
(74) Representative: Schwabe - Sandmair - Marx
(86) International application number: PCT/JP2010/053433
(87) International publication number: WO 2010/110019

(57) **Abstract**

A fuel cell includes an electrolyte layer; a fuel-side electrode to which fuel is supplied; and an oxygen-side electrode to which oxygen is supplied, the fuel-side electrode and the oxygen-side electrode being disposed to face each other with the electrolyte layer sandwiched therebetween. The electrolyte layer is an anion exchange membrane. The fuel-side electrode contains cobalt and nickel. The fuel includes a compound containing at least hydrogen and nitrogen. The proportion of the nickel content relative to total moles of cobalt and nickel in the fuel-side electrode is 70 mol% or less.

## Description

### TECHNICAL FIELD

The present invention relates to a fuel cell, to be more specific, to a polymer electrolyte fuel cell.

### BACKGROUND ART

Heretofore, various types of fuel cells such as alkaline fuel cells (AFC), polymer electrolyte fuel cells (PEFC), phosphoric fuel cells (PAFC), molten carbonate fuel cells (MCFC), and solid oxide fuel cells (SOFC) have been known. Of these types of fuel cells, polymer electrolyte fuel cells are operable under relatively low temperature, and therefore use of polymer electrolyte fuel cells for various applications, for example, automotive use, has been discussed.

In such polymer electrolyte fuel cells, generally, a fuel-side electrode to which fuel is supplied and an oxygen-side electrode to which oxygen is supplied are disposed to face each other with an electrolyte layer composed of a solid polymer membrane sandwiched therebetween.

As an example of such a polymer electrolyte fuel cell, it has been proposed (for example, see Patent Document 1 below) that in a fuel cell including an electrolyte layer which is an anion exchange membrane; a fuel-side electrode and an oxygen-side electrode that are disposed to face each other with the electrolyte layer sandwiched therebetween; a fuel supply member that is disposed to face the other side of the fuel-side electrode facing the electrolyte layer, and that supplies fuel including a compound containing at least hydrogen and nitrogen to the fuel-side electrode; and an oxygen supply member that is disposed to face the other side of the oxygen-side electrode facing the electrolyte layer, and that supplies oxygen to the oxygen-side electrode, the fuel-side electrode contains cobalt.

### Citation List

### Patent Document

Patent Document 1: Japanese Unexamined Patent Publication No. 2006-244961

### SUMMARY OF THE INVENTION

### PROBLEM TO BE SOLVED BY THE INVENTION

However, in these days, further improvement in power generation performance of fuel cells is desired.

An object of the present invention is to provide a fuel cell in which a compound containing at least hydrogen and nitrogen is included as fuel; an anion exchange membrane is used as an electrolyte layer; and that has excellent power generation performance.

### MEANS FOR SOLVING THE PROBLEM

To achieve the above object, a fuel cell of the present invention includes an electrolyte layer; a fuel-side electrode to which fuel is supplied; and an oxygen-side electrode to which oxygen is supplied, the fuel-side electrode and the oxygen-side electrode being disposed to face each other with the electrolyte layer sandwiched therebetween, wherein the electrolyte layer is an anion exchange membrane, the fuel-side electrode contains cobalt and nickel, and the fuel includes a compound containing at least hydrogen and nitrogen, and the proportion of the nickel content relative to total moles of cobalt and nickel in the fuel-side electrode is 70 mol% or less.

In the fuel cell of the present invention, it is preferable that the proportion of the nickel content relative to total moles of cobalt and nickel in the fuel-side electrode is 50 mol% or less.

In the fuel cell of the present invention, it is preferable that the fuel is a hydrazine.

### EFFECTS OF THE INVENTION

In a fuel cell of the present invention, cobalt and nickel are contained in the fuel-side electrode and the proportion of the nickel content relative to total moles of cobalt and nickel in the fuel-side electrode is 70 mol% or less, and therefore improvement in fuel use efficiency and suppression of heat generation amount can be achieved, and moreover, improvement in power generation performance can be achieved.

### BRIEF DESCRIPTION OF THE DRAWINGS

FIG. 1 is a schematic diagram illustrating an embodiment of a fuel cell of the present invention.
FIG. 2 is a graph illustrating results of an activity measurement of a fuel-side electrode.
FIG. 3 is a graph illustrating measurement results of power generation characteristics of a cell (current-voltage characteristics).

### EMBODIMENT OF THE INVENTION

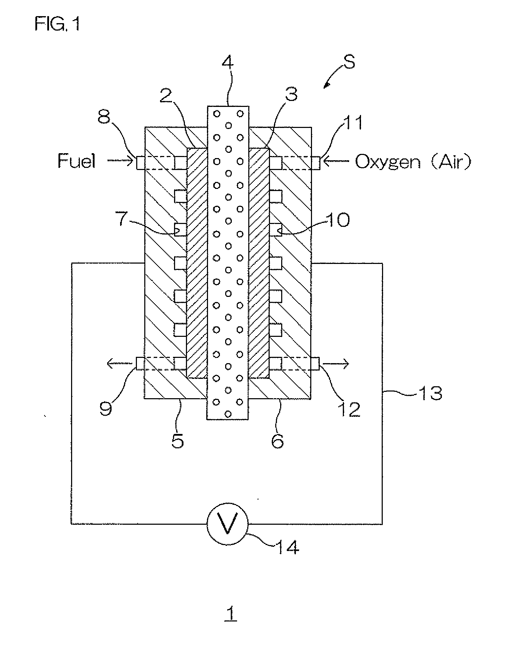

FIG. 1 is a schematic diagram illustrating an embodiment of a fuel cell of the present invention. In FIG. 1, a fuel cell 1 includes a single cell S, and the single cell S includes a fuel-side electrode 2, an oxygen-side electrode 3, and an electrolyte layer 4. The fuel-side electrode 2 and the oxygen-side electrode 3 are disposed to face each other with the electrolyte layer 4 sandwiched therebetween.

The fuel-side electrode 2 faces and is in contact with one side surface of the electrolyte layer 4. The fuel-side electrode 2 contains, as a metal catalyst, cobalt (Co) and nickel (Ni).

In the present invention, primary particles of the metal catalyst containing cobalt and nickel have an average particle size of, for example, 5 to 100 nm. Example of cobalt is, more preferably, cobalt micro powder having a primary particle size of, 0.1 µm or less.

The average particle size means a crystallite size measured by an X-ray diffraction method or an average value of primary particles obtained by morphological observation with a transmission electron microscope. For example, the particle size obtained by a precipitation method such as laser diffraction shows a large value due to aggregation of primary particles, but such a particle size is excluded.

Such a metal catalyst containing cobalt and nickel has a specific surface area of, for example, 10 to 90 m²/g, or preferably 30 to 60 m²/g.

Examples of metal catalysts include a mixture of cobalt and nickel (mixture catalyst); an alloy of cobalt and nickel (cobalt-nickel alloy); and a mixture of cobalt, nickel, and a cobalt-nickel alloy.

To produce such forms of a metal catalyst, for example, first, a dispersion liquid containing cobalt salt and nickel salt is prepared, and then, cobalt and nickel are coprecipitated and thereafter calcined.

To be more specific, to produce a metal catalyst, for example, first, cobalt salt and nickel salt are dispersed in an organic solvent, thereby preparing a dispersion liquid.

Examples of cobalt salts include an inorganic metal salt of cobalt and an organic metal salt of cobalt, and preferably an organic metal salt of cobalt is used.

Examples of organic metal salts of cobalt include cobalt carboxylates formed from acetate, propionate, etc.; a β-diketone compound or β-keto ester compound represented by general formula (1) below; and/or a metal chelate complex of cobalt formed from a β-dicarboxylate ester compound represented by general formula (2) below.

R₁COCHR₃COR₂ (1)

(where R1 represents an alkyl group having 1 to 6 carbon atoms, a fluoroalkyl group having 1 to 6 carbon atoms, or an aryl group; R2 represents an alkyl group having 1 to 6 carbon atoms, a fluoroalkyl group having 1 to 6 carbon atoms, an aryl group, or an alkoxy group having 1 to 4 carbon atoms; and R3 represents a hydrogen atom or an alkyl group having 1 to 4 carbon atoms.)

R₅CH(COR₄)₂ (2)

(where R4 represents an alkyl group having 1 to 6 carbon atoms; and R5 represents a hydrogen atom or an alkyl group having 1 to 4 carbon atoms.)
Examples of alkyl groups having 1 to 6 carbon atoms in R1, R2, and R4 in the above general formula (1) and the above general formula (2) include methyl, ethyl, propyl, isopropyl, n-butyl, s-butyl, t-butyl, t-amyl, and t-hexyl. Examples of alkyl groups having 1 to 4 carbon atoms in R3 and R5 include methyl, ethyl, propyl, isopropyl, n-butyl, s-butyl, and t-butyl.

Examples of fluoroalkyl groups having 1 to 6 carbon atoms in R1 and R2 in the above general formula (1) include trifluoromethyl. Examples of aryl groups in R1 and R2 include phenyl. Examples of alkoxy groups having 1 to 4 carbon atoms in R1 include methoxy, ethoxy, propoxy, isopropoxy, n-butoxy, s-butoxy, and t-butoxy.

Examples of β-diketone compounds include, to be more specific, 2,4-pentanedione, 2,4-hexanedione, 2,2-dimethyl-3,5-hexanedione, 1-phenyl-1,3-butanedione, 1-trifluoromethyl-1,3-butanedione, hexafluoroacetylacetone, 1,3-diphenyl-1,3-propanedione, and dipivaloylmethane.

Examples of β-keto ester compounds include, to be more specific, methylacetoacetate, ethylacetoacetate, and t-butylacetoacetate.

Examples of β-dicarboxylate ester compounds include, to be more specific, dimethyl malonate, and diethyl malonate.

These cobalt organic metal salts may be used alone or in combination of two or more.

A preferable example of the cobalt organic metal salt is a metal chelate complex of cobalt.

Examples of nickel salts include inorganic metal salts of nickel and organic metal salts of nickel, and preferably, organic metal salts of nickel is used.

Examples of organic metal salts of nickel include nickel carboxylate formed from acetate, propionate, etc.; a β-diketone compound or a β-keto ester compound represented by the above general formula (1); and/or a metal chelate complex of nickel formed from the β-dicarboxylate ester compound represented by the above general formula (2).

Examples of organic solvents include aromatic hydrocarbons, aliphatic hydrocarbons, alcohols (e.g., 2-propanol, etc.), ketones, and esters. Preferably, alcohols are used.

These organic metal salts of nickel may be used alone or in combination of two or more.

As the organic metal salt of nickel, preferably, a metal chelate complex of nickel is used.

Next, in this method, the obtained dispersion liquid is heated, for example, under an inert gas (e.g., nitrogen gas) atmosphere, at 20 to 100°C, and for 10 to 60 min.

Next, in this method, to the dispersion liquid, a reducing agent (e.g., sodium borohydride (NaBH₄), etc.) and the above-described organic solvent are blended and coprecipitated, and thereafter, the mixture is stirred, for example, at 20 to 100°C, and for 10 to 60 min.

Next, in this method, the precipitate and the organic solvent are separated, and the obtained precipitate is washed with, for example, pure water. Thereafter, the precipitate is dried, for example, under 0.01 to 100 Pa, at 20 to 80°C, and for 1 to 12 hours. Thereafter, the precipitate is calcined, for example, under a reduction atmosphere (H₂/N₂ mixture gas), at 300 to 800°C, and for 1 to 12 hours.

The metal catalyst containing cobalt and nickel can be obtained in this manner.

For the metal catalyst, a mixture obtained by mixing a commercially available product of micropowder of cobalt metal, a commercially available product of micropowder of nickel metal, and as necessary, a commercially available product of micropowder of a cobalt-nickel alloy may also be used.

Such a metal catalyst essentially contains cobalt (metal atoms of cobalt) and nickel (metal atoms of nickel). The proportion of the cobalt content or nickel content relative to total moles of cobalt and nickel is, in the case of nickel content (including nickel contained in the cobalt-nickel alloy), 70 mol% or less, or preferably 50 mol% or less and 5 mol% or more, or preferably 25 mol% or more, and in the case of cobalt content (including cobalt contained in the cobalt-nickel alloy), 30 mol% or more, or preferably 50 mol% or more and 95 mol% or less, or more preferably 75 mol% or less.

When the proportion of the nickel (metal atoms of nickel) content exceeds the above proportion, excellent power generation performance may not be obtained.

A metal catalyst having the proportion of the cobalt content and the proportion of the nickel content within the above-described range can be produced, for example, by adjusting the mixing ratio of cobalt to nickel in the above-described method for producing a metal catalyst.

To be more specific, in the above-described method for producing a metal catalyst, cobalt salt and nickel salt are blended so that the molarity of nickel (metal atoms of nickel) contained in nickel salt relative to total moles of cobalt (metal atoms of cobalt) contained in cobalt salt and nickel (metal atoms of nickel) contained in nickel salt is 70 mol% or less, or preferably 50 mol% or less, and 5 mol% or more, or preferably 25 mol% or more.

A metal catalyst having a proportion of the cobalt content and a proportion of the nickel content within the above-described range can be produced in this manner.

In forming a fuel-side electrode 2 from such a metal catalyst, without particular limitation, for example, a membrane-electrode assembly is formed. The membrane-electrode assembly may be formed by a known method. For example, first, the above-described metal catalyst and electrolyte solution are mixed, and as necessary, an appropriate organic solvent such as alcohol is added to adjust its viscosity, thereby preparing a dispersion liquid of the above-described metal catalyst. Then, the dispersion liquid is coated on the surface of the electrolyte layer 4 (anion exchange membrane), thereby fixing the above-described metal catalyst to the surface of the electrolyte layer 4.

The amount of the metal catalyst used is, for example, 0.1 to 10 mg/cm².

In the present invention, the metal catalyst obtained as described above may be loaded on carbon, and then thereafter the carbon supporting the metal catalyst may be applied on the electrolyte layer 4.

To load the metal catalyst on carbon, for example, in the above-described method for producing a metal catalyst, for example, porous carbon support is blended along with cobalt salt and nickel salt.

When the metal catalyst supported on carbon is used, the metal catalyst is used so that the metal catalyst that is supported on carbon is 0.1 to 10 mg/cm², or preferably 0.5 to 5.0 mg/cm²_{.}

In the fuel-side electrode 2, as described later, a compound (in the following, referred to as "fuel compound") containing at least hydrogen and nitrogen supplied to the fuel-side electrode 2 is allowed to react with hydroxide ions (OH-) that passed through the electrolyte layer 4, thereby generating electrons (e-), nitrogens (N₂), and water (H₂O).

The oxygen-side electrode 3 faces and is in contact with the other side surface of the electrolyte layer 4. The oxygen-side electrode 3 is formed as, but not particularly limited to, for example, a porous electrode in which a catalyst is supported.

The above-described catalyst is not limited as long as the catalyst has catalytic effects, as described later, of generating hydroxide ions (OH-) from oxygen (O₂) and water (H₂O). Examples of catalysts include elements from groups 8 to 10 (VIII) of the periodic table of elements such as platinum group elements (Ru, Rh, Pd, Os, Ir, and Pt) and iron group elements (Fe, Co, and Ni); group 11 (IB) of the periodic table of elements such as Cu, Ag, and Au; and mixtures thereof. Of these catalysts, preferably, Co is used. The amount of catalyst supported is, for example, 0.1 to 10 mg/cm², or preferably 0.1 to 5 mg/cm². The catalyst is preferably supported on carbon.

In the oxygen-side electrode 3, as described later, supplied oxygen (O₂), water (H₂O), and electrons (e-) that passed through an external circuit 13 are allowed to react with each other, thereby generating hydroxide ions (OH-).

The electrolyte layer 4 is formed from an anion exchange membrane. The anion exchange membrane is not particularly limited as long as the anion exchange membrane is a medium that is capable of moving hydroxide ions (OH-) generated in the oxygen-side electrode 3 from the oxygen-side electrode 3 to the fuel-side electrode 2, and examples thereof include a solid polymer membrane (anion exchange resin) having an anion exchange group such as a quaternary ammonium group and a pyridinium group.

A single cell S further includes a fuel supply member 5 and an oxygen supply member 6. The fuel supply member 5 is composed of a conductive member that is not gas-permeable, and one side surface thereof faces and is in contact with the fuel-side electrode 2. In the fuel supply member 5, fuel-side flow paths 7 for bringing fuel into contact with the fuel-side electrode 2 entirely are formed as zigzag grooves dented from one side surface of the fuel supply member 5. The fuel-side flow paths 7 are provided with an inlet 8 and an outlet 9. The inlet 8 and the outlet 9 penetrate through the fuel supply member 5, and are formed, continuously with the fuel-side flow paths 7, at an upstream-side end portion and at a downstream-side end portion of the fuel-side flow paths 7, respectively.

The oxygen supply member 6 as well is composed of, like the fuel supply member 5, a conductive member that is not gas permeable, and one side surface thereof faces and is in contact with the oxygen-side electrode 3. In the oxygen supply member 6 as well, oxygen-side flow paths 10 for bringing oxygen (air) into contact with the oxygen-side electrode 3 entirely are formed as zigzag grooves dented from one side surface of the oxygen supply member 6. The oxygen-side flow paths 10 are also provided with an inlet 11 and an outlet 12. The inlet 11 and the outlet 12 penetrate through the oxygen supply member 6, and are formed, continuously with the oxygen-side flow paths 10, at an upstream-side end portion and at a downstream-side end portion of the oxygen-side flow paths 10, respectively.

The fuel cell 1 is, in practice, formed into a stack, in which a plurality of the above-described single cells S are laminated. Therefore, the fuel supply member 5 and the oxygen supply member 6 are actually configured as separators having the fuel-side flow paths 7 and the oxygen-side flow paths 10 formed on both side surfaces thereof.

Although not shown, the fuel cell 1 is provided with a current collecting plate formed from a conductive material, the current collecting plate being configured to take out electromotive force generated in the fuel cell 1 from a terminal provided in the current collecting plate to outside.

Experimentally (as a model), it is also possible to measure the generated voltage by connecting the fuel supply member 5 and the oxygen supply member 6 of the single cell S by the external circuit 13, with a voltmeter 14 provided in the external circuit 13.

In the present invention, fuel containing the above-described fuel compound is directly supplied without undergoing reformation.

In the fuel compound, hydrogen is preferably bonded directly to nitrogen. The fuel compound preferably has a nitrogen-nitrogen bond, and preferably do not have a carbon-carbon bond. The number of carbon atoms is preferably small as much as possible (preferably zero).

The fuel compound may contain oxygen atoms and sulfur atoms to an extent that does not hinder its performance. To be more specific, the fuel compound may contain oxygen atoms and sulfur atoms as a carbonyl group, a hydroxyl group, a hydrate, a sulfonic acid group, or a sulfate.

In view of the foregoing, examples of fuel compounds in the present invention include, to be specific, hydrazines such as hydrazine (NH₂NH₂), hydrazine hydrate (NH₂NH₂ · H₂O), hydrazine carbonate ((NH₂NH₂)₂CO₂), hydrazine sulfate (NH₂NH₂ · H₂SO₄), monomethylhydrazine (CH₃NHNH₂), dimethylhydrazine ((CH₃)₂NNH₂, CH₃NHNHCH₃), and carbohydrazide ((NHNH₂)₂CO); urea (NH₂CONH₂); ammonia (NH₃); heterocyclics such as imidazole, 1,3,5-triazine, and 3-amino-1,2,4-triazole; and hydroxylamines such as hydroxylamine (NH₂OH), and hydroxylamine sulfate (NH₂OH· H2S04). Such a fuel compound may be used alone, or may be used in combination of two or more. Preferably, hydrazines are used.

Of the above-described fuel compounds, a compound that does not contain carbon, that is, hydrazine (NH₂NH₂), hydrazine hydrate (NH₂NH₂ · H₂O), hydrazine sulfate (NH₂NH₂· H₂SO₄), ammonia (NH₃), hydroxylamine (NH₂OH), and hydroxylamine sulfate (NH₂OH · H₂SO₄) can achieve improvement in durability and realize substantial zero emission because the catalyst is not poisoned by CO as described later as in the reaction of hydrazine.

For fuel, although fuel compounds given above as examples may be used as is, the fuel compound of above examples may be used as a solution, for example, of water and/or alcohol (e.g., lower alcohols such as methanol, ethanol, propanol, and isopropanol). In this case, the concentration of the fuel compound in the solution is, though differs depending on the kind of the fuel compound, for example, 1 to 90 wt%, or preferably 1 to 30 wt%.

Furthermore, for fuel, the above-described fuel compound may be used as gas (e.g., vapor).

Then, by supplying the above-described fuel to the fuel-side flow paths 7 of the fuel supply member 5, while supplying oxygen (air) to the oxygen-side flow paths 10 of the oxygen supply member 6, in the oxygen-side electrode 3, as described next, electrons (e-) generated in the fuel-side electrode 2 and moved via the external circuit 13 are allowed to react with water (H₂O) and oxygen (O²), thereby generating hydroxide ions (OH-). The generated hydroxide ions (OH-) move from the oxygen-side electrode 3 to the fuel-side electrode 2, through the electrolyte layer 4 composed of an anion exchange membrane. Then, in the fuel-side electrode 2, hydroxide ions (OH-) that passed through the electrolyte layer 4 are allowed to react with fuel, thereby generating electrons (e-). The generated electrons (e-) move from the fuel supply member 5 to the oxygen supply member 6 via the external circuit 13, and are supplied to the oxygen-side electrode 3. Such electrochemical reactions in the fuel-side electrode 2 and the oxygen-side electrode 3 generate electromotive force, thereby generating electric power.

In such an electrochemical reaction, there are two types of reactions, i.e., single stage reaction, in which fuel is allowed to directly react with hydroxide ions (OH-) in the fuel-side electrode 2; and two-stage reaction, in which after decomposition of fuel into hydrogen (H₂) and nitrogen (N₂), hydrogen (H₂) generated from the decomposition is allowed to react with hydroxide ions (OH-).

For example, when hydrazine (NH₂NH₂) is used as fuel, the single stage reaction in the fuel-side electrode 2, the oxygen-side electrode 3, and as a whole can be expressed as following reaction formulas (1) to (3).
(1) NH₂NH₂+4OH-→4H₂O+N₂+4e- (fuel-side electrode)
(2) O₂+2H₂O+4e-→4OH- (oxygen-side electrode)
(3) NH₂NH₂+O₂→2H₂O+N₂ (in total)
   The two-stage reaction in the fuel-side electrode 2, the oxygen-side electrode 3, and as a whole can be expressed as the following formulas (4) to (7).
(4) NH₂NH₂→2H₂+N₂ (decomposition reaction; fuel-side electrode)
(5) H₂+2OH-→2H₂O+2e- (fuel-side electrode)
(6) 1/2O₂+H₂O+2e-→2OH- (oxygen-side electrode)
(7) H₂+1/2O₂→H₂O (in total)
As shown in the above-described reaction formula (4), in the two-stage reaction, hydrazine (NH₂NH₂) is once decomposed into hydrogen (H₂) and nitrogen (N₂), and therefore energy loss due to the decomposition reaction is caused. Thus, when the ratio of the two-stage reaction relative to the single stage reaction is high, decrease in fuel use efficiency and increase in heat generation amount are caused, and moreover, decrease in power generation performance becomes inevitable.

However, in this fuel cell 1, as described above, the fuel-side electrode 2 essentially contains cobalt and nickel as the metal catalyst (composed of cobalt and nickel), and the proportion of the nickel content relative to total moles of cobalt and nickel is 70 mol% or less. This metal catalyst is capable of suppressing decomposition reaction (decomposition reaction represented by the above-described formula (4)) of fuel (hydrazine in above-described example), thereby promoting direct reaction of fuel with hydroxide ions (OH-) (reaction represented by the above-described formula (1)). Therefore, improvement in fuel use efficiency, and suppression of heat generation amount can be achieved, and moreover, improvement in power generation performance can also be achieved.

Although operation conditions of the fuel cell 1 are not particularly limited, operation conditions are set to, for example, a pressure application of 200kPa or less, or preferably 100kPa or less in the fuel-side electrode 2 side, a pressure application of 200kPa or less, or preferably 100kPa or less in the oxygen-side electrode 3 side, and a temperature of the single cell S of 0 to 120°C, or preferably 20 to 80°C.

Although embodiments of the present invention are described above, embodiments of the present invention are not limited to those described above, and can be appropriately modified to an extent that does not change the gist of the present invention.

Examples of use of a fuel cell of the present invention include a power source for drive motors of automobiles, ships, aircrafts; and a power source for telecommunications equipment such as mobile phones.

### EXAMPLES

While in the following, the present invention is described with reference to Examples and Comparative Examples, the present invention is not limited to any of them by no means.

### <Production of Metal Catalyst>

### EXAMPLE 1

0.001 mol of nickel acetylacetonate ([C₅H₈O₂)₂Ni) and 0.003 mol of cobalt acetylacetonate ([C₅H₈O₂)₂Co) were dispersed in 320 mL of 2-propanol to prepare a dispersion liquid. The obtained dispersion liquid was kept in a nitrogen atmosphere at 82°C (boiling point of 2-propanol) for 30 min.

Then, 0.3g of sodium borohydride (reducing agent, NaBH₄) and 80 mL of 2-propanol were introduced into the dispersion liquid. After the mixture was kept at 82°C for 20 min, the mixture was stirred at room temperature for 60 min.

Then, the mixture was subjected to centrifugal separation (number of revolutions: 4000 rpm) for 4 hours, and the obtained precipitate was washed with pure water. This operation of centrifugal separation and washing was repeated to a total of three times.

Then, the precipitate was dried using a reduced-pressure drying furnace under 0.01 Pa at 80°C for 12 hours, and thereafter, the precipitate was calcined in the presence of H₂/N₂ gas mixture (H₂/N₂ = 10/90 (weight ratio)) at 300°C for 2 hours, thereby producing a metal catalyst composed of cobalt and nickel.

In the obtained metal catalyst, the proportion (calculated from the formulation) of the nickel content relative to total moles of cobalt and nickel was 25 mol%, and the proportion (calculated from the formulation) of the cobalt content relative to total moles of cobalt and nickel was 75 mol%(Ni: Co = 25: 75 (molar ratio)).

The obtained metal catalyst had a particle size of 30 to 100 nm, and a specific surface area of 57.3 m²/g.

### EXAMPLE 2

A metal catalyst composed of cobalt and nickel was obtained in the same manner as in Example 1, except that 0.002 mol of nickel acetylacetonate ([C₅H₈O₂]₂Ni) and 0.002 mol of cobalt acetylacetonate ([C₅H₈O₂]₂Co) were blended instead of 0.001 mol of nickel acetylacetonate ([C₅H₈O₂]₂Ni) and 0.003 mol of cobalt acetylacetonate ([C₅H₈O₂]₂Co).

In the obtained metal catalyst, the proportion (calculated from the formulation) of the nickel content relative to total moles of cobalt and nickel was 50 mol%, and the proportion (calculated from the formulation) of the cobalt content relative to total moles of cobalt and nickel was 50 mol% (Ni:Co = 50:50 (molar ratio)).

The obtained metal catalyst had a particle size of 5 to 50 nm and a specific surface area of 38.0 m²/g.

### Comparative Example 1

A metal catalyst composed of cobalt was obtained in the same manner as in Example 1, except that 0.004 mol of cobalt acetylacetonate ([C₅H₈O₂]₂Co) was blended instead of 0.001 mol of nickel acetylacetonate ([C₅H8C₂]₂Ni) and 0.003 mol of cobalt acetylacetonate ([C₅H₈O₂]₂Co).

The obtained metal catalyst did not contain nickel, and its cobalt content (calculated from the formulation) was 100% (Ni: Co = 0:100 (molar ratio)).

The obtained metal catalyst had a specific surface area of 20.7 m²/g.

### Comparative Example 2

A metal catalyst composed of cobalt and nickel was obtained in the same manner as in Example 1, except that 0.003 mol of nickel acetylacetonate ([C₅O₈O₂]₂Ni) and 0.001 mol of cobalt acetylacetonate ([C₅H₈O₂]₂Co) were blended instead of 0.001 mol of nickel acetylacetonate ([C₅H₈O₂]₂Ni) and 0.003 mol of cobalt acetylacetonate ([C₅H₈O₂]₂Co).

In the obtained metal catalyst, the proportion (calculated from the formulation) of the nickel content relative to total moles of cobalt and nickel was 75 mol%, and the proportion (calculated from the formulation) of the cobalt content relative to total moles of cobalt and nickel was 25 mol% (Ni: Co = 75:25 (molar ratio)).

The obtained metal catalyst had a particle size of 30 to 70 nm and a specific surface area of 40.6 m²/g.

### Comparative Example 3

A metal catalyst composed of nickel was obtained in the same manner as in Example 1, except that 0.004 mol of nickel acetylacetonate ([C₅H₈O₂]₂Ni) was blended instead of 0.001 mol of nickel acetylacetonate ([C₅H₈O₂]₂Ni) and 0.003 mol of cobalt acetylacetonate ([C₅H₈O₂]₂Co).

The obtained metal catalyst did not contain cobalt, and its nickel content (calculated from the formulation) was 100% (Ni:Co = 100:0 (molar ratio)).

The obtained metal catalyst had a specific surface area of 19.7 m²/g.

### <Activity Measurement of Fuel-Side Electrode>

For each of the metal catalysts obtained in Examples and Comparative Examples, a test piece of a fuel-side electrode including the metal catalyst was made, and its activity was measured.

The test pieces of the fuel-side electrode including the metal catalyst of Examples and Comparative Examples were produced in the following manner: a mixture of the metal catalyst (for each of Examples and Comparative Examples) and an anion exchange resin were appropriately dispersed in an organic solvent such as alcohols to prepare an ink; 3 µL of the obtained ink was weighed and taken with a micropipet, added dropwise on a glassy carbon electrode, and dried.

Activity of the fuel-side electrode was measured by obtaining a hydrazine oxidation onset potential with a cyclic voltammetry by a rotating disk electrode. To be specific, after the test piece of the above-described fuel-side electrode was stabilized under a temperature condition of 60°C in an aqueous KOH solution of 1N, the test piece was immersed in an aqueous KOH solution of 1N containing hydrazine hydrate at a ratio of 1 mol/L, and its activity was measured. Cobalt was used for a counter electrode, and a silver-silver chloride electrode was used for a reference electrode. The scanning range in the activity measurement was -1.4 to -0.8 V (relative to Ag/AgCl).

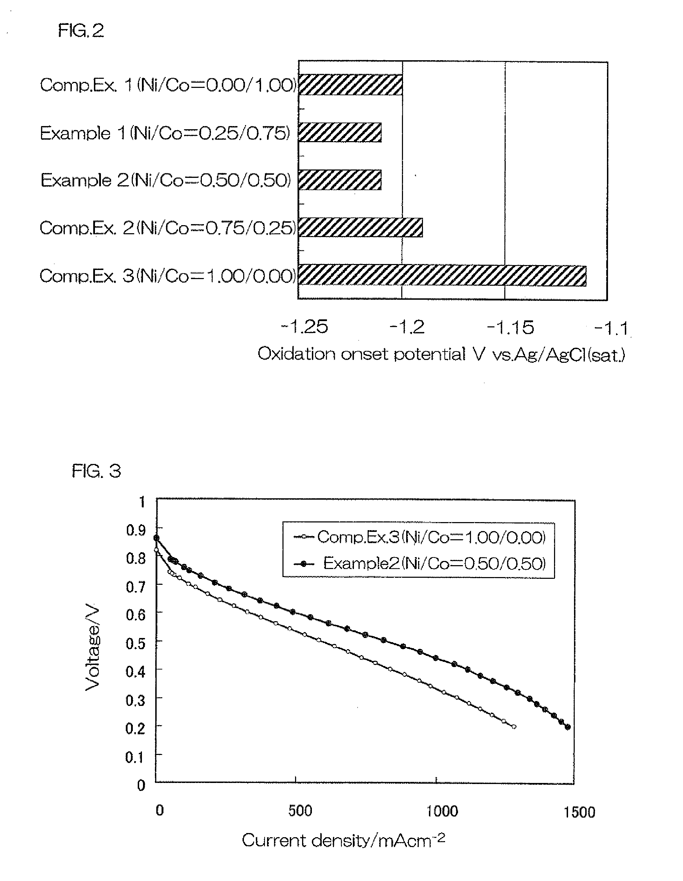

The results of the activity measurement (cathode sweep) are shown in FIG. 2.

As shown in FIG. 2, the metal catalysts of Examples had a low oxidation onset potential and were excellent in power generation performance compared with the metal catalysts of Comparative Examples.

### <Measurement in Cell Power Generation Characteristics>

For two types of fuel-side electrodes, one using the metal catalyst of Example 2 and the other using the metal catalyst of Comparative Example 3, using the oxygen-side electrode containing cobalt as a catalyst, a cell unit of an anion exchange membrane-electrode assembly was made and their cell power generation characteristics were measured.

The anion exchange membrane-electrode assembly was produced as follows. The metal catalyst of Example 2 or the metal catalyst of Comparative Example 3 and the anion exchange resin were mixed, and the obtained mixture was appropriately dispersed in an organic solvent such as alcohols to prepare an ink. The obtained ink was directly applied on one side surface of the anion exchange membrane, thus integrally forming a fuel-side electrode on the one side surface.

Then, cobalt nanopowder (average particle size 28 nm, specific surface area 50 m²/g, manufactured by Junye) and the anion exchange resin were mixed, and the obtained mixture was appropriately dispersed in an organic solvent such as alcohols to prepare an ink. Thereafter, the obtained ink was directly applied on the other side surface of the anion exchange membrane, thus integrally forming an oxygen-side electrode (Co) on the other side surface.

In the obtained anion exchange membrane-electrode assembly, the amount of the catalysts supported in the oxygen-side electrode and the fuel-side electrode was as follows.
(1) fuel-side electrode (metal catalyst of Example 2): 2.6 mg/cm², oxygen-side electrode (Co): 2.6 mg/cm²
(2) fuel-side electrode (metal catalyst of Comparative Example 3): 2.6 mg/cm², oxygen-side electrode (Co): 2.6 mg/cm²
Then, on both side surfaces of the obtained anion exchange membrane-electrode assembly, a carbon sheet of a conductive porous body serving as a gas diffusion layer was connected, thus producing a single cell unit of a fuel cell.

To these single cell units, hydrazine hydrate 1 mol/dm³-an aqueous KOH solution of 1N was supplied to the fuel-side electrode side at a speed of 2 mL/min, and air was supplied to the oxygen-side electrode side at a speed of 0.5 L/min. Operation conditions were, the supplying pressure of 120kPa · abs and a cell operation temperature of 80°C.

Current-voltage characteristics under the above-described conditions are shown in FIG. 3.

As shown in FIG. 3, when the metal catalyst of Example 2 was used for the fuel-side electrode, the output density was high and excellent output characteristics were exhibited. Furthermore, when the metal catalyst of the Comparative Example 3 was used for the fuel-side electrode, output characteristics degraded compared with the case when the fuel-side electrode was the metal catalyst of EXAMPLE 2.

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

A fuel cell of the present invention is used for various applications such as automobile applications.

## Claims

1. A fuel cell comprising an electrolyte layer;
a fuel-side electrode to which fuel is supplied; and
an oxygen-side electrode to which oxygen is supplied, the fuel-side electrode and the oxygen-side electrode being disposed to face each other with the electrolyte layer sandwiched therebetween,
wherein the electrolyte layer is an anion exchange membrane,
the fuel-side electrode contains cobalt and nickel,
the fuel includes a compound containing at least hydrogen and nitrogen, and
the proportion of the nickel content relative to total moles of cobalt and nickel in the fuel-side electrode is 70 mol% or less.

2. The fuel cell according to Claim 1, wherein the proportion of the nickel content relative to total moles of cobalt and nickel in the fuel-side electrode is 50 mol% or less.

3. The fuel cell according to Claim 1, wherein the fuel is a hydrazine.
